# EUROPEAN PATENT APPLICATION

(11) **EP 4 202 721 A1**
(43) Date of publication of application: **28.06.2023**
(21) Application number: 21217462.7
(22) Date of filing: 23.12.2021
(51) Int. Cl.: G06F 16/27, G06Q 10/10

(54) **DIGITAL WORKBENCH FOR MULTI-USER PROJECT HANDLING**

(71) Applicant: Zurich Insurance Company Ltd., 8002 Zürich (CH)
(72) Inventor: Haueter, Claude, 8002 Zürich (CH); Bysaeth, Andrew, 8002 Zürich (CH); Huser, Rene, 8002 Zürich (CH); Müller, Dorthe, 8002 Zürich (CH); Auchter, Dirk, 8002 Zürich (CH)
(74) Representative: Hepp Wenger Ryffel AG

(57) **Abstract**

The invention pertains to a digital workbench (WB) system for multi-user project handling that is more reliable, overcomes inefficiencies and avoids user frustration. The system makes use of a split / distributed database system with multiple modules (M₁, M₂, ...) and is configured such that, when a change is being made to an entity (A₁) in the document store (DS₁) of a module (M₁), a change notification (N) is sent out to respective other module (s) (M₂, ...) . The system is further configured such that in respective other module (s) (M₂, ...) in response to the change notification (N) the respective entity (A₂, ...) that corresponds to the changed entity (A₁) is being updated accordingly; and/or other entities (B₂, ...) than the one corresponding to the changed entity (A₁) are being changed based on (a) predefined rule(s).

## Description

The invention pertains to the field of multi-user project handling in a digital environment.

Large projects such as e.g. infrastructure planning and building projects are extremely demanding for several reasons. First, such projects are highly interdisciplinary which means that many specialists are involved. Second, time is always of the essence which means that many people are typically required to work on the same project with their respective specialist knowledge at the same time. Third, changes to a parameter of the project prompted by one specialist may have to be taken into account as such in the work being done by other specialists, sometimes even at the same time. Fourth, a parameter that has been changed by one specialist may have further impact on other parameters which have likewise to be taken into account in the work being done by other specialists, sometimes even at the same time again.

By way of example, planning and building an airport requires many (sometimes opposing) constraints to be considered by respective specialists in their work. For example, the planning of escape routes and fire protection measures influence the space requirements and the room layout at a given handling capacity, and vice versa. Further, a certain luggage transport system might work well for a certain passenger capacity, but a different system with different space requirement might become necessary beyond that passenger capacity. Likewise, in planning and building a skyscraper, the room layout (e.g. open space office vs single offices) influences the requirements for fire protection measures and escape routes, and vice versa.

The constraints for a digital environment that allows for simultaneous work of the various specialists on the same project are very demanding. The amount of data is enormous, and so are the respective databases where the data is stored. It is not uncommon that more than one specialist changes a parameter at a given time which has an influence on the work currently being done by another specialist. This causes inefficiencies and frustration for users, and it may even cause databases to crash.

The present invention aims to overcome the aforementioned drawbacks of current multi-user project handling systems in a digital environment. More specifically, it is an object of the present invention to run multi-user project handling systems in the digital environment more efficiently and more reliable, and at the same time to avoid user frustration.

Accordingly, a digital workbench for multi-user project handling according to the invention is configured such as to allow for multiple user to change (in particular to input or change) data in a database system. The data comprises distinct entities (e.g. passengers per day; max. passengers per hour; cubature; floorspace; etc.).

The digital workbench comprises a user interface (e.g. a graphical user interface, GUI; and/or a web page front-end); and two or more modules, wherein each module comprises a document store. Preferably, the document stores are implemented as documentbased NoSQL databases, such as e.g. RavenDB.

A certain user (or user group) has access to only the module where his specific expertise is primarily needed. By way of example, specialists in fire protection measures only have access to a module that deals with their respective field of specialisation; specialists in escape route planning only have access to a module that deals with their respective field of specialisation; etc.

The digital workbench may be configured such that a single user interface (e.g. a GUI) provides access for different users (or user groups) to only the respective module (with the respective document store) that is relevant for their respective field of specialisation (e.g. based on login data). Alternatively, the digital workbench may be configured such that different user interfaces (e.g. GUIs) are provided for the different users (or user groups).

According to the invention, the same entities are comprised in two or more document stores. Again, by way of example, the passengers per day; max. passengers per hour; cubature; floorspace; etc. may be comprised in two or more document stores.

According to the invention, the system is configured such that
- entities can be changed by a user in the respective document store; and
- when a change is being made to an entity in the document store of a certain module, a change notification is sent out to respective other module(s).

The user accordingly only changes the entity in the respective document store of his specialisation, while a change notification is automatically sent out to respective other module(s).

The system is further configured such that in respective other module(s) in response to the change notification the respective entity that corresponds to the changed entity is being updated accordingly. Additionally or alternatively, other entities than the one corresponding to the changed entity are being changed based on (a) pre-defined rule(s).

Again, by way of example, when an architect or general planning officer changes the entity 'floorspace [sqm]' in his respective module, this entity is being updated accordingly in respective other modules. Further, the change to the entity 'floorspace [sqm]' may prompt changes to the entity 'cubature', based on a pre-defined height of the building. The change might also prompt changes in other modules such as in HVAC planning, or fire protection, or escape route planning.

In a system as outlined above, data duplication is allowed. Unlike prior art database systems currently used in multi-user project management which make use of a single large document store, split document stores that allow/encourage data duplication turned out to be highly beneficial: Potential conflicts are thereby avoided when multiple users change the same data at a given point of time, and deadlocks or performance issues are mitigated.

In preferred embodiments, the same entity can be updated at the same time (in different modules). Updating of the entities in the respective modules is dealt with by each module based on the change notifications and change handling rules / update resolution logic that can be customized to the respective module. Change handling rules may range from a 'red flag' notification (and no update) with immediate notification to other users of respective other modules, to a 'silent update' when the impact of the change(s) is/are practically irrelevant or within tolerance in respective other modules. A further example is a silent update with the notification of an expert (e.g. when floorspace is changed, this also changes smoke extraction flow speed and a notification is sent to an expert).

Preferably, the entities in the document store(s) are structured mark-up documents, such as e.g. a JSON document serialized with the ProtoBuf protocol.

In further preferred embodiments, the change notifications are sent through an asynchronous notification mechanism.

It is further preferred that the digital workbench comprises a central operational data store, wherein the system is configured such that the central operational data store is kept continuously up to date to a pre-defined level by tracking changes in the document stores of the two or more modules. A reporting optimized database is preferred for the operational data store. For example, SQL sever / SSIS with star or snowflake schemes can advantageously be used.

It is to be understood that not each and every change must necessarily be tracked in the operational data store. While doing so would be preferred for the sake of completeness, depending on the purpose of the operational data store it may be beneficial to track changes of a certain importance that are sufficient to allow for a snapshot view of what is currently ongoing on a pre-defined need-to-know level.

The central operational data store is preferably organized as a relational database, in star or snowflake schemes.

In further preferred embodiments, the system comprises a bridge API regulator and translator functionality which is configured such that it controls population of the central operational data store.

Preferably, updates received from the document stores of the two or more modules are received by an aggregator (summing up document revisions and content) which updates the operational data store accordingly. The aggregator receives the continuous updates from the modules via the change notifications and aggregates them into updates for the operational data store. The changes are consolidated for external operational data availability and viewability. The system can be implemented for ad interim availability and viewability; and/or the final availability and viewability.

It is further preferred that the system is configured such as to allow for updating modules with external data. By way of example, external data can be current costs for raw material; changed regulations; etc.

Yet a further aspect of the invention pertains to a method of updating data in a database system, in particular in a digital workbench as outlined hereinbefore. The database system comprises two or more modules, each comprising a document store. The data (D) comprises distinct entities as outlined hereinbefore, and the same entities are comprised in two or more document stores. The method comprises the steps of:
i) sending out a change notification to respective other module(s) when a change is being made by a user to an entity in the document store of a module;
ii) updating the respective entity that corresponds to the changed entity in respective other document stores accordingly, in response to the change notification; and/or change other entities than the one corresponding to the changed entity in respective other document stores based on (a) pre-defined rule(s), in response to the change notification.

It will be evident to the skilled person that complex infrastructure planning and building projects, as outlined by way of example above, can be dealt with and more reliably, more efficiently and with less user frustration. The invention as outlined above preferably includes the step of building the planned infrastructure object. The actual step of building the infrastructure object can begin earlier than before, due to the advantages of the digital workbench outlined above, and it allows for adaptions of plans much faster even when building is already ongoing. The infrastructure object can be handed over faster, and with more flexibility for changes ad interim which do result in much less delays due to change of plans than before.

What has been outlined above with respect to infrastructure projects can likewise be applied to the insurance business. The benefits of the digital workbench as outlined above apply likewise, i.e. that a multi-user project handling system for complex international insurance programs in the digital environment can be run technically more efficiently and more reliable, and at the same time avoids user frustration. In such a context, the respective modules are e.g. Data Gathering & Lifecycle, Risk Assessment and Enrichment, Program Structuring, Deal Structuring and Guidelines, Pricing and Negotiation, Policy Instruction, Reporting & Servicing.

The invention will now be described in greater detail by way of non-limiting embodiments and figures.
- Fig. 1:: System architecture overview
- Fig. 2:: Exemplary workflow

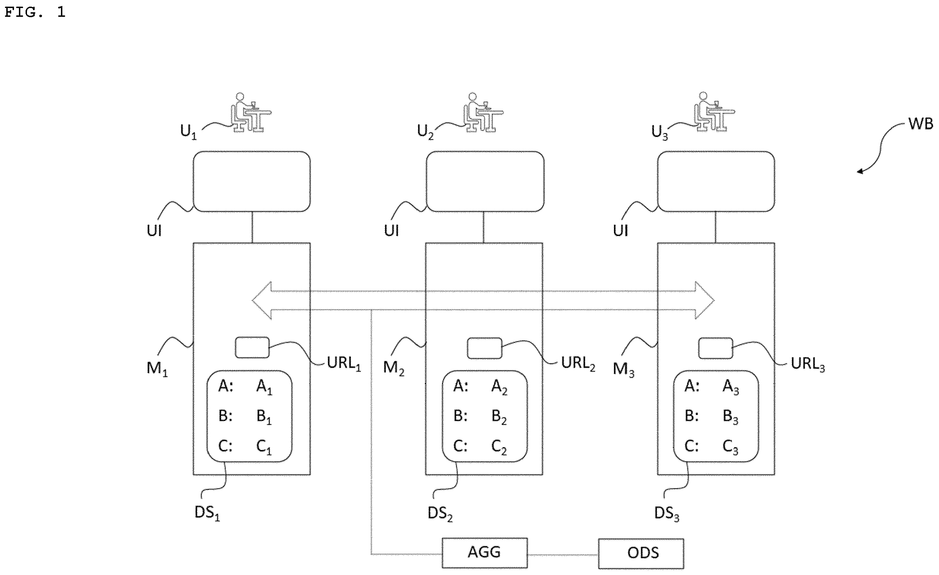

The overall system architecture of a digital workbench WB according to the invention is outlined in Fig. 1. By way of example, the shown embodiment involves three user U₁, U₂, U₃ who access the workbench WB wire respective user interfaces UI. Each user U₁, U₂, U₃ with his respective specialist knowledge is working on the project via a specific module user M₁, M₂, M₃ of the workbench that relates to the users' task. The modules M₁, M₂, M₃ each comprise a respective document store DS₁, DS₂, DS₃ where the various data entities A, B, C are stored. By way of example, entity A could be 'floorspace [sqm]', and the respective value of that entity A is stored in the different modules as A₁, A₂, A₃.

When user U₁ changes the entity A, i.e. A₁ in the document store DS₁ of his module M₁, a change notification is distributed to the other modules M₂ and M₃, via a BUS system (illustrated by the horizontal bidirectional arrow). The change notifications trigger update resolution logics URL in the respective modules. The update resolution logics can be customized to the respective module. Change handling rules may e.g. be a 'red flag' notification or a 'silent update' as will be outlined in more detail below.

Optionally, the system may be equipped with an operational data store ODS that is populated via an aggregator AGG and based on the change notifications. The aggregator AGG is functionally connected to the BUS system that distributes this change notifications.

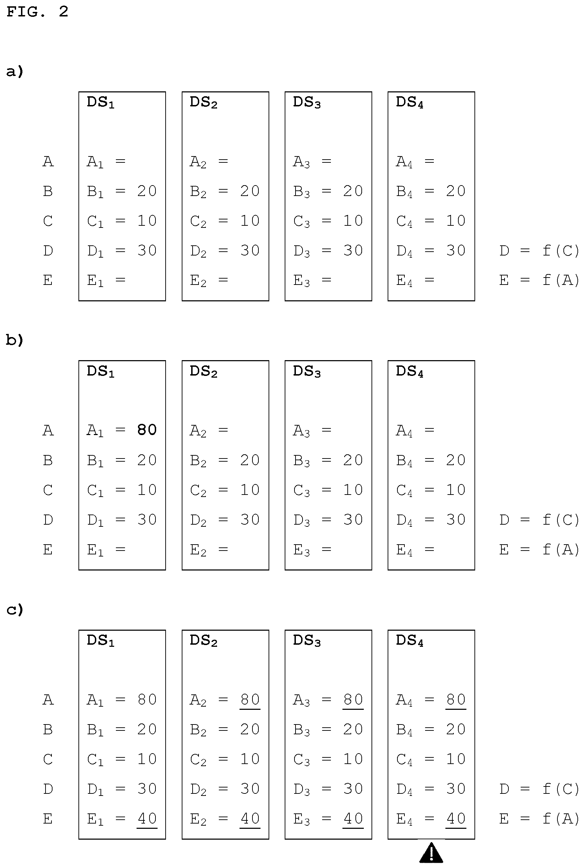

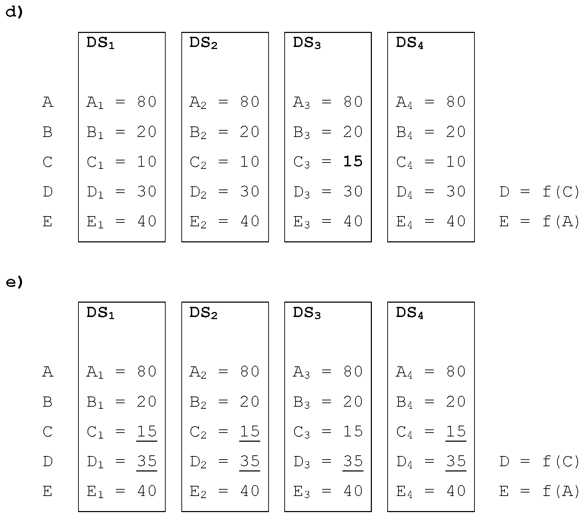

Fig. 2 shows by way of example a workflow where different users update different entities in their respective document stores. In the shown embodiment, the workbench uses five data entities, i.e. A, B, C, D and E. D depends on C (D=f(C)), and E depends on A (E=f(A)).

The starting configuration of the workbench is shown in Fig. 2a, with the respective values for A, B, C, D and E being set identically over all modules. No values are set for A and E; those are to be input by the users of the workbench.

In Fig. 2b, user U₁ inputs a value for A in his document store DS₁ (marked-up in bold). This triggers identical changes to the respective entities A₂, A₃ and A₄ in the respective other document stores DS₂, DS₃ and DS₄, via change notifications and based on update resolution logics as outlined above (marked-up underlined). Further, now that entity A is populated, changes are also implemented for entity A in the modules (because E=f(A); also marked-up underlined). The resulting value of 40 for entity E may be unproblematic for the tasks associated with modules M₁, M₂ and M₃ (which are accordingly updated silently) but may well be an issue for the task associated with module M₄ (e.g. a cubature above a certain threshold requires a different / more expensive setup of fire protection measures). In the shown embodiment, the value of 40 for the entity E₄ triggers a 'red flag'. In the shown embodiment, the update resolution logic triggers involvement of a responsible person who is allowed to overrule the 'red flag' and accept the value of 40 for the entity E₄, in full appreciation of the impacts that this might have (e.g. higher costs, more time needed, etc.).

The value of 40 for the entity E₄ has accordingly been accepted in Fig. 2d (no 'red flag' anymore). User U₃ sets the value for entity C₃ in his document store DS₃ to 15 (marked-up in bold). This change is again silently carried over to the respective other document stores DS₁, DS₂ and DS₄ via change notifications and update resolution logics. Since D=f(C), the respective values for D are updated in all document stores accordingly.

## Claims

1. Digital workbench (WB) for multi-user project handling, configured such as to allow for multiple user (U₁, U₂, ...) to change data (D) in a database system (DBS), the digital workbench (WB) comprising:
i) a user interface (UI);
ii) two or more modules (M₁, M₂, ...), each comprising a document store (DS₁, DS₂, ...) ;
wherein a user (U₁) has access to only one module (M₁);
wherein the data (D) comprises distinct entities (A, B, ...);
wherein the same entities (A₁, A₂, ...; B₁, B₂, ...) are comprised in two or more document stores (DS₁, DS₂, ...) ; wherein the entities (A₁, A₂, ...; B₁, B₂, ...) can be changed by a user in the respective document store (DS₁, DS₂, ...) of the respective module (M₁, M₂, ...) ;
wherein the system is configured such that, when a change is being made to an entity (A₁) in the document store (DS₁) of a module (M₁), a change notification (N) is sent out to respective other module (s) (M₂, ...) ;
wherein the system is configured such that in respective other module (s) (M₂, ...) in response to the change notification (N)
- the respective entity (A₂, ...) that corresponds to the changed entity (A₁) is being updated accordingly; and/or
- other entities (B₂, ...) than the one corresponding to the changed entity (A₁) are being changed based on (a) pre-defined rule(s).

2. Digital workbench (WB) of claim 1, wherein the entities (A₁, A₂, ...; B₁, B₂, ...) are structured mark-up documents.

3. Digital workbench (WB) of any of the preceding claims, configured such that the change notifications are sent through an asynchronous notification mechanism.

4. Digital workbench (WB) of any of the preceding claims, further comprising a central operational data store (ODS), wherein the system is configured such that the central operational data store (ODS) is kept continuously up to date to a pre-defined level by tracking changes in the document stores (DS₁, DS₂, ...) of the two or more modules (M₁, M₂, ...).

5. Digital workbench (WB) of claim 4, wherein the central operational data store (ODS) is organized as a relational database, in star or snowflake schemes.

6. Digital workbench (WB) of any of claims 4 to 5, further comprising bridge API regulator and translator (BART) functionality which is configured such that it controls population of the central operational data store (ODS).

7. Digital workbench (WB) of claim 6, wherein updates received from the document stores (DS₁, DS₂, ...) of the two or more modules (M₁, M₂, ...) are received by an aggregator (AGG) which updates the ODS accordingly.

8. Digital workbench (WB) of any of claims 4 to 7, wherein the system is configured such as to allow for updating modules with external data.

9. A method of updating data (D) in a database system (DBS), in particular in a digital workbench (WB) of any of claims 1 to 8, wherein the database system (DBS) comprises two or more modules (M₁, M₂, ...), each comprising a document store (DS₁, DS₂, ...);
wherein the data (D) comprises distinct entities (A, B, ...);
wherein the same entities (A₁, A₂, ...; B₁, B₂, ...) are comprised in two or more document stores (DS₁, DS₂, ...); comprising the steps of:
- sending out a change notification (N) to respective other module (s) (M₂, ...) when a change is being made by a user (U₁) to an entity (A₁) in the document store (DS₁) of a module (M₁);
- updating the respective entity (A₂, ...) that corresponds to the changed entity (A₁) in respective other document stores (DS₂, ...) accordingly, in response to the change notification; and/or
change other entities (B₂, ...) than the one corresponding to the changed entity (A₁) in respective other document stores (DS₂, ...) based on (a) pre-defined rule(s), in response to the change notification.
